# EUROPEAN PATENT SPECIFICATION

(11) **EP 0 512 646 B1**
(45) Date of publication and mention of the grant of the patent: **01.02.1995**
(21) Application number: 92201273.7
(22) Date of filing: 06.05.1992
(51) Int. Cl.: B32B 3/12, B32B 15/12, E04C 2/36

(54) **Method for manufacture of a sandwich panel, the sandwich panel obtained with it, and its application in the construction industry**
Verfahren zur Herstellung einer Sandwichplatte, die damit erhaltene Sandwichplatte und die Verwendung beim Bau
Procédé de production d'un panneau sandwich, le panneau sandwich obtenu et son application dans le domaine de la construction

(30) Priority: 07.05.1991 NL 9100782
(43) Date of publication of application: 11.11.1992
(73) Proprietor: HOOGOVENS GROEP B.V., NL-1970 CA IJmuiden (NL)
(72) Inventor: Bunck, Cornelis Johannes, NL-1075 PB Amsterdam (NL)
(74) Representative: Van Breda, Jacobus, Mr. Ir.

(56) References cited:
- EP-A- 0 136 096
- GB-A- 2 104 839
- US-A- 3 817 808
- US-A- 4 461 796
- WORLD PATENTS INDEX LATEST Week 9048, Derwent Publications Ltd., London, GB; AN 90-358033 & JP-A-2258243
- 1022 Adhäsion 32(1988) Nov.no11, München DE pp.10, 13-15

## Description

The invention relates to a method for the manufacture of a sandwich panel comprising a honeycomb core and a skin sheet on both sides of the core.

Methods of the kind referred to in the preamble are known from the construction industry. Other applications are found in noise barriers, storage containers and in bodywork for freight vehicle construction.

US 4,461,796 teaches a sound damping material comprising a honeycomb or corrugated core, a plane skin sheet and the application of a pressure sensitive adhesive layer to attach the skin steel to the core.

From US 3,817,808 it is known to form a sandwich panel consisting of a rigid thin walled metallic honeycomb core with skin sheets on each side of the core, whereby a hot melt epoxy adhesive provides for the bonding of core and skin sheets. This type of panel is particularly intended for use in aircrafts.

In the construction industry, for commercial and industrial buildings in particular, an aluminium sandwich panel is used wherein the core consists of an aluminium honeycomb and the skin sheets are also manufactured from aluminium. It has also been proposed to manufacture the honeycomb core not from aluminium but rather from an appropriate type of paper. Due to the honeycomb structure the finished sandwich panel then has adequate stiffness. Such sandwich panels with a honeycomb core of paper are known in a structure which is provided with a hardboard skin sheet. In this form they are used as interior doors and also as furniture panels, cladding panels and pallets and the like.

For joining together the skin sheets and the honeycomb core, use is generally made of so-called polyurethane glue systems in either one-component or two-component versions. The one-component polyurethane cures under the effect of moisture, is less expensive and the conditions of application are less critical than the two component polyurethane glue which has the advantage that its curing time can be adjusted more accurately.

In current practice, the sandwich panel is manufactured in such a way that the respective skin sheets are provided with glue, following which the sandwich panel is assembled by the honeycomb core being placed between the surfaces provided with glue.

In US 3,817,808 a hot-melt epoxy adhesive is applied to one end face of the honeycomb core and the skin sheet is then placed on said face.

The invention differs from the known practice in that a glue of the reactive hot-melt type is applied to at least one end face of the honeycomb core, whereafter the glue is solidified so as to enable sliding of the skin sheet(s) to be applied, relative to said honeycomb core, and in that a skin sheet is then placed onto that end face, the temperature of the sandwich panel is adjusted to a value in the 120-160 °C range, and the sandwich panel is then cooled down to the ambient temperature so as to effect bonding between the skin sheet(s) and the honeycomb core. The reactive hot-melt glue may be applied in liquid state to the contact face or faces of the honeycomb core, at a raised temperature and after the glue is applied and before the skin sheet is placed on, the glue can be brought to a solid state by cooling.

A panel produced in accordance with the novel method is illustrated in the accompanying drawing.

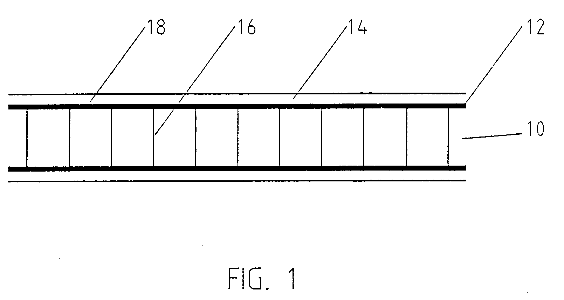

Figure 1 is a schematic representation of a panel in accordance with the present invention.

In Figure 1 the numeral 10 designates the honeycomb core. The cells 16 of the core 10 open into opposite end faces 18. A glue layer 12 on the end faces 18 of the core bonds the core 10 and the skin sheet 14 together.

The invention has advantages with respect to various problems and drawbacks associated with the known methods described above. First of all, the known method in which a large part of the skin surface is provided with glue, is relatively expensive due to the fact that no more than approximately 5% of the skin surface comes into contact with an end face of the honeycomb core. On the assumption that the adhering surface area is rather larger than the contact surface area of the honeycomb core end face with the respective skin sheets, over 90% of the glue is applied unnecessarily.

Consequently an important advantage of the new method is the substantial saving in glue costs which may be made in accordance with the invention. Although glue systems of the reactive hot-melt type do cost more per kilo than the one or two component glue systems based on polyurethane, this is more than compensated for by the much lower glue consumption.

Furthermore, as compared to the method known from US 3,817,808, the method in accordance with the invention can give the advantage that when assembling the sandwich panel, the skin sheet or skin sheets may still slide relative to the honeycomb core without the glue becoming removed from the end faces of the honeycomb core and before adhesion is effected. If known polyurethane glues were used, such sliding cannot be permitted because the glue would be swept off the contact surfaces. The present method now avoids this problem due to the solid nature of the reactive hot-melt glue prior to the temperature rise and consequent adhesion which follows positioning of the skin sheet.

With the method proposed the further advantage is obtainable that it is possible to carry out a specific surface treatment to the near side faces of the skin sheets of the sandwich panel. The treatment is not worthwhile in known practice because the glue layer applied on the inner side of the skin sheets essentially counteracts its useful effect. Such a surface treatment may be aimed at improving the insulation quality of the sandwich panel.

A very important advantage is to be found in that the sandwich panel with a paper honeycomb core and metal skin sheets can be manufactured in accordance with the method of the present invention suitable for use in the construction industry as a panel which is mounted away from the vertical.

In contrast to other kinds of sandwich panel, the sandwich panel in accordance with the invention can be provided with flat skin sheets and does not need to be provided with any profiling to produce the required stiffness. On the one hand this gives an attractive visual appearance where used for exterior components. On the other hand the thermally effective surface of the sandwich panel is as such no larger than necessary which offers heat management advantages.

Unlike in the case of sandwich panel in accordance with the invention, in the case of the known sandwich panels undesired moisture can develop in the sandwich panel. This can pose problems with the types of glue used such that adhesion will not be effected.

Furthermore, environmentally it is an advantage of the sandwich panel in accordance with the invention that it lends itself very well to recycling without undesired residual products occurring. The core consisting of paper, cardboard or kraft paper is easy to break down and steel or aluminium suitable for re-use may for example be used for the skin sheets.

The sandwich panel manufactured in accordance with the invention thus offers the possibility of alleviating many problems to that it is particularly suitable for use as a construction industry panel where a high resistance to the effects of weather, in particular fluctuations of temperature, may be required.

In another aspect of the invention the method is characterised in that the skin sheet is placed on the end face of the honeycomb under a contact pressure in the region of approximately 0.01-0.3 MPa.

It is preferable for the temperature in the area of the contact surface of the skin sheet and the abutting end face of the honeycomb to be raised. It is then desirable for the sandwich panel to be heated inductively. Such a manner of heating achieves the effect that, due to adhesion forces, the glue positions itself in such a way around the contact surfaces of the skin sheet and the honeycomb core as well as in their immediate surroundings (this phenomenon is known in the art as fillet forming), that the optimum geometry of the glue joint that this achieves also produces an optimum adhesive action. Moreover, there is an energy advantage to be found in this because the raised temperature is essentially only applied where it is needed and desired. Following this heating stage the sandwich panel is cooled and is immediately suitable for further processing without the integrity of the sandwich panel being threatened. The passage of time causes further post-curing by "reticulation" or cross-linking of the glue.

The reactive hot-melt is preferably chosen from the group comprised of epoxy glues, polyurethane glues. In particular reactive hot-melt glue based on polyurethane is preferable in view of its lower costs. Reactive hot-melt polyurethane glues are solid at room temperature and can be brought, reversibly, into a liquid state by heating to a melting point. Further heating above the melting point results in an irreversible change of the hot-melt polyurethane glue. Then, after cooling down to room temperature the glue provides the desired connection between the glued surfaces.

## Claims

1. A method of forming a sandwich panel comprising a honeycomb core (10) with a skin sheet (14) on both sides of the core, which are attached to the honeycomb core (10) by application of a hot-melt glue system, characterized in that a glue of the reactive hot-melt type is applied to at least one end face (18) of the honeycomb core (10), whereafter the glue is solidified so as to enable sliding of the skin sheet(s) (14) to be applied, relative to said honeycomb core (10), and in that a skin sheet (14) is then placed onto said face (18) and the temperature of the sandwich panel is adjusted to a value in the 120-160 °C range, after which the sandwich panel is cooled down to the ambient temperature so as to effect bonding between the skin sheet(s) (14) and the honeycomb core (10).

2. A method according to claim 1, wherein the skin sheet (14) is placed on said surface under application of a contact pressure of approximately 0.01-0.3 MPa.

3. A method according to claim 1 or claim 2, wherein the temperature in the area of the contact surfaces of the skin sheet (14) and the honeycomb core (10) is raised.

4. A method according to any one of claims 1,2 or 3 in which the sandwich panel is heated inductively.

5. A method according to any one of the preceding claims wherein the reactive hot-melt is chosen from the group comprised of epoxy glues and polyurethane glues.

6. A method according to claim 5 wherein polyurethane is used as the reactive hot-melt.

## Patentansprüche

1. Ein Verfahren zur Ausbildung eines Sandwichpaneels, das einen Wabenkern (10) mit einer Außenlage (14) auf beiden Seiten des Kerns aufweist, welche durch Anwendung eines Schmelzklebersystems an dem Wabenkern (10) angebracht wird,
dadurch gekennzeichnet, daß ein Klebstoff des reaktionsfähigen Schmelzklebers auf zumindest eine Endfläche (18) des Wabenkerns (10) aufgebracht wird, wonach der Klebstoff erhärtet, um so ein Gleiten der anzubringenden Außenlage(n) (14) relativ zu besagtem Wabenkern (10) zu ermöglichen, und daß dann eine Außenlage (14) auf besagte Fläche (18) aufgelegt und die Temperatur des Sandwichpaneels auf einen Wert im Bereich 120 bis 160°C eingestellt wird, wonach das Sandwichpaneel auf Umgebungstemperatur heruntergekühlt wird, um so ein Anhaften zwischen der bzw. den Außenlage(n) (14) und dem Wabenkern (10) zu bewirken.

2. Ein Verfahren nach Anspruch 1,
bei dem die Außenlage (14) auf besagter Oberfläche unter Anwendung eines Kontaktdruckes von etwa 0,01-0,03 MPa aufgelegt wird.

3. Ein Verfahren nach Anspruch 1 oder Anspruch 2,
bei dem die Temperatur im Bereich der Kontaktoberflächen der Außenlage (14) und des Wabenkerns (10) angehoben wird.

4. Ein Verfahren nach einem der Ansprüche 1, 2 oder 3,
bei dem das Sandwichpaneel induktiv erhitzt wird.

5. Ein Verfahren nach einem der vorangehenden Ansprüche,
bei dem der reaktionsfähige Schmelzkleber aus der Gruppe ausgewählt wird, die Epoxy- und Polyurethanklebstoffe enthält.

6. Ein Verfahren nach Anspruch 5,
bei dem als reaktionsfähiger Schmelzkleber Polyurethan verwendet wird.

## Revendications

1. Procédé de fabrication d'un panneau sandwich comprenant une âme en nid d'abeilles (10) et une peau (14) de chaque côté de l'âme, peaux qui sont fixées à l'âme en nid d'abeilles (10) par application d'une colle fondue à chaud,
caractérisé en ce qu'une colle de type colle réactive fondue à chaud est appliquée sur une face d'extrémité au moins (18) de l'âme en nid d'abeilles (10), après quoi la colle est solidifiée pour permettre à la ou aux peau (x) (14) devant être appliquées de glisser par rapport à ladite âme en nid d'abeilles (10), et en ce qu'une peau (14) est alors placée sur ladite face (18) et la tampérature du panneau sandwich est réglée à une valeur comprise dans la fourchette 120-160°C, puis le panneau sandwich est refroidi jusqu'à température ambiante de manière à produire une liaison entre la ou les peau(x) (14) et l'âme en nid d'abeilles (10).

2. Procédé selon la revendication 1, dans lequel la peau (14) est placée sur ladite surface avec application d'une pression de contact d'approximativement 0,01 à 0,3 MPa.

3. Procédé selon la revendication 1 ou la revendication 2, dans lequel on élève la température dans la région des surfaces de contact entre la peau (14) et l'âme en nid d'abeilles (10).

4. Procédé selon l'une quelconque des revendications 1, 2 ou 3, dans lequel le panneau sandwich est chauffé par induction.

5. Procédé selon l'une quelconque des précédentes revendications, dans lequel la colle réactive fondue à chaud est choisie dans le groupe formé par les colles époxydes et les colles polyuréthane.

6. Procédé selon la revendication 5, dans lequel on utilise du polyuréthane en tant que colle réactive fondue à chaud.
